# EUROPEAN PATENT SPECIFICATION

(11) **EP 2 881 190 B1**
(45) Date of publication and mention of the grant of the patent: **03.07.2019**
(21) Application number: 14200664.2
(22) Date of filing: 15.11.2010
(51) Int. Cl.: B21D 19/08, B21D 28/32, B30B 1/40

(54) **Method for managing groups of aerial cam devices for a press machine**
Verfahren zum Verwalten von unterschiedlichen Sätzen von Luftnockentrieben für eine Presse
Procédé pour la gestion d'ensembles de cames aériennes pour une presse

(30) Priority: 08.01.2010 JP 2010002774
(43) Date of publication of application: 10.06.2015
(62) Divisional of application: 10191223.6
(73) Proprietor: Sankyo Oilless Industry, Inc., Fuchu-shi Tokyo 183-0036 (JP)
(72) Inventor: Shibata, Takashi, Fuchu-shi Tokyo 183-0036 (JP); Morita, Atsushi, Fuchu-shi Tokyo 183-0036 (JP); Taguchi, Kouichi, Fuchu-shi Tokyo 183-0036 (JP); Harada, Shizu, Fuchu-shi Tokyo 183-0036 (JP); Kako, Hiroyoshi, Fuchu-shi Tokyo 183-0036 (JP)
(74) Representative: Vossius & Partner Patentanwälte Rechtsanwälte mbB

(56) References cited:
- EP-A1- 0 484 588
- EP-B1- 1 476 260
- JP-A- 2000 135 526
- US-A1- 2009 078 067

## Description

The present disclosure relates to a compactly unitized cam device, which is mounted between a fixed mold and a movable mold for, for example, drilling a work. Specifically, the present invention relates to a method for grouping such cam devices according to the preamble of claim 1.

In the prior art, when designing molds, arrangement of a cam device and other various functional units such as a guide post, a work detection device, and a carrying device so as to avoid mutual interference is required. Manufactures specific for functional units standardize these units and provide detailed description about their outside dimensions and movements along with specifications such as load abilities written on catalogues for easy arrangement in mold design. As an example of the prior art, JP-A-2000-135526 is referred.

The process ability required for the cam device for a press mold varies depending on the material and the thickness of a work (object to be machined), and the mounting position of the process tool on a cam slider of the cam device. The process ability that the cam device can exert is lowered as the mounting position of the process tool deviates from the center of the cam device.

Therefore, in the cam device in the prior art, every time when changes in thickness or material of the work (the object to be machined) or changes in mounting positions of the various functional units are made in the course of mold design, the size of the cam device must also be changed, which results in a problem of too much burden in making engineering changes.

There is another problem such that the cam device cannot exert its endurance as specified due to uneven contact with respect to a sliding surface of the cam device, which is caused by a mounting error introduced when being mounted on the mold, so that the lowering of the endurance life is resulted and hence replacement of the cam device in short intervals is required.

In order to solve the problems described above, it is an object of the invention to provide a method for grouping cam devices which allow specification changes, which are required to be made when changing the process ability of the cam device in the course of the mold design or the use, to be achieved without necessity of changes in outside shape of the cam device.

In order to solve the above-described problem and achieve the object, the method as defined in independent claim 1 is provided. Further preferred embodiments are defined in the dependent claims.

Although not covered by the present invention, the present specification also discloses cam device including: a cam holder having a sliding contact surface; a cam slider having a sliding contact surface which comes into sliding contact with the sliding contact surface of the cam holder to allow the cam slider being freely movable, and a cam surface to move the cam slider in a predetermined process direction; and a cam driver having a cam surface, which comes into contact with the cam surface of the cam slider, and is configured to forcedly move the cam slider in the predetermined process direction, wherein hardness of the sliding contact surface of the cam holder is set to be lower than hardness of the sliding contact surface of the cam slider, hardness of the cam surface of the cam driver is set to be lower than the hardness of the cam surface of the cam slider, and whereby in case a load exerted to the cam device is changed, the load change is compensated by changing the hardness or the material of the sliding contact surface of the cam holder or by changing the hardness or the material of the cam surface of the cam driver without changing the hardness of the sliding contact surface and the cam surface of the cam slider.

The sliding contact surface of the cam holder is formed of a sliding contact member detachably attached to the cam holder, and the cam surface of the cam driver is formed of a cam member detachably attached to the cam driver.

Preferably, combinations of the materials are same between a sliding surface made up of the sliding contact surface of the cam slider and the sliding contact surface of the cam holder and a sliding portion made up of the cam surface of the cam driver and the cam surface of the cam slider, and the enlargement of the contact surface area due to the conformity during the initial abrasion period is accelerated by increasing the surface roughness of the sliding surface after the finishing process, or by changing arrangement of multiple recessed pockets formed on the sliding surface to fill up solid lubricant, and the contact surface pressure is prevented from excessively increasing due to uneven contact caused by a mounting error of the cam device and a process error of the mold.

Preferably, the cam devices are grouped depending on the basis of width dimensions, and the design structures of the respective groups are determined in such a manner that the maximum process ability in a certain group among the groups is larger than the minimum process ability of an adjacent group having a larger width dimension, and smaller than the maximum process ability in an adjacent group having a larger width dimension, thereby reducing the necessity of changing the cam device for the change of the process ability.

The change of the specifications of the cam device in a case where the process ability and the mounting position of the cam device are changed in the course of the mold design can be performed without necessity of changing the outside shape of the cam device, so that the number of processes of the design change in the mold design can be reduced, and the period required for designing can also be reduced.

Furthermore, excessive increase in frequency of replacement of the cam device due to the lowering of the endurance life of the sliding surface of the cam device caused by the uneven contact thereof, which is caused by the change in material and thickness of the work (object to be processed) after the operation, a minute process, or the assembly error of the mold can be prevented.

In addition, the sliding properties of the cam device can be improved by replacing only the sliding member as needed to improve the process ability of the cam device. Therefore, the improvement of the process ability after the operation can be achieved by the replacement of part of the members instead of the replacement of the entire cam device, so that the cost for improving the process ability is reduced.
Fig. 1 is an exploded perspective view showing a cam device. and
Fig. 2 is a graph showing a relationship between the process ability and the cam width, which is the most important factor in mold designs for the respective types, of the same cam device.

A cam device 1 includes a cam holder 2, a cam slider 3, and a cam driver 4. The cam holder 2 has a sliding contact surface 2a. The cam slider 3 is freely movable on a sliding contact surface 3a that comes into sliding contact with the sliding contact surface 2a of the cam holder 2, and is moved on a cam surface 3b in a predetermined process direction. The cam driver 4 has a cam surface 4a, which comes into contact with the cam surface 3b of the cam slider 3, and is configured to forcedly move the cam slider 3 in the predetermined process direction.

The cam slider 3 includes an extension rod 5a projecting from one side thereof in the direction of sliding movement, and includes a returning resilient member 5 formed of a gas-pressure cylinder around the outer periphery of the proximal portion thereof. The returning resilient member 5 is configured to cause the extension rod 5a to be inserted into a front wall of the cam holder 2 to bring the cam slider 3 to its initial position using a resilient force thereof. The cam holder 2 is provided at one end thereof with a stopper 6 for preventing disconnection, which is configured to be freely secured with bolts, and on both side walls are provided with slide keepers 7 configured to slidably suspend the cam slider 3. The cam slider 3 is also provided with a forcedly returning follower 8 mounted thereon. The returning resilient member may be other member such as a coil spring.

The stopper 6 is a wall, which prevents the cam slider 3 suspended at a neck portion with the slide keepers 7 from coming off toward the rear. The slide keepers 7 are fixed to both side walls of the cam holder 2 to clamp the neck portion of the cam slider 3 with their L-shaped locking portions provided on lower sides thereof, thereby suspending the cam slider 3 so as to be slidable in the fore-and-aft direction. The forcedly returning follower 8 is configured to engage a guide groove on the side of the cam driver 4 to forcedly move the cam slider 3 to the initial position when the process tool of the cam slider 3 is caught by the work and hence can hardly come out.

Assuming that the surface pressure generated at the sliding portion is constant, the abrasion properties of the sliding portion, which is made up of sliding contact surfaces 2a and 3a of the cam holder 2 and the cam slider 3, depend on respective combinations of materials, process methods, heat treatments of a sliding member 2b and sliding portion 3c of the cam slider 3, and arrangement of multiple recessed pockets filled with solid lubricants and filled amounts of the solid lubricants.

In the same manner, assuming that the surface pressure generated at the sliding portion is constant, the abrasion properties of the sliding surface, which is made up of cam surfaces 4a and 3b of the cam driver 4 and the cam slider 3, depend on respective combinations of materials, process methods, heat treatments of a cam member 4b of the cam driver 4 and the sliding portion 3d of the cam slider 3, and arrangement of multiple recessed pockets filled with solid lubricants and filling density of the solid lubricants.

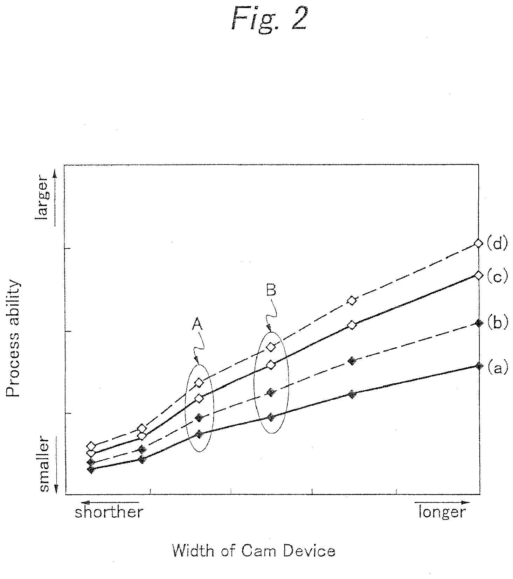

Accordingly, by selecting the material and the process method of the sliding portion and the cam width which is a basic dimension of the cam device according to the object, the process abilities and the progress of abrasion of the cam devices having the same outside shape size can be determined, and the maximum process ability in the same grade can be set to be higher than the minimum process ability of the cam device in the grade one rank higher. Fig. 2 shows examples of the combinations, and other combinations are also applicable.

Although not shown in Fig. 2, controlling the speed of the progress of abrasion also includes methods other than the combination of the materials. For example, it includes increasing the initial abrasion by changing the process method, for example, by increasing the surface roughness of a surface to be processed or increasing the filling density of the solid lubricant, thereby securing stable abrasion properties in order to avoid destructive damage such as burning with the sacrifice of the retardation of abrasion.

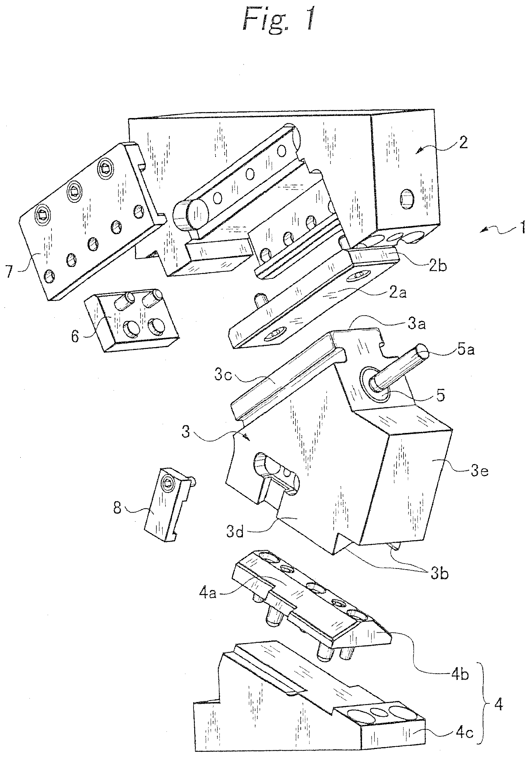

Therefore, as a measure for improving the process ability of the cam device on the basis of the replacement of parts after operation, the sliding member 2b is formed as a separate member from the cam holder 2, which is a member on the side of the main body, and is configured to be detachably attached to a mounting surface of the cam holder 2 with bolts or the like as shown in Fig. 1 in order to avoid the necessity of replacement of the cam slider which requires adjustment of mounting accuracy of the process tool such as a pierce punch for making holes.

As shown in Fig. 1, the cam driver 4 is also configured in the same manner. That is, the cam member 4b having the cam surface 4a is detachably attached to a cam driver base portion 4c to allow easy replacement using the bolts. Therefore, cost increase is avoided.

The process tool is attached to the cam slider 3, and the relative positional accuracy between the process tool and a work (object to be processed) requires a high degree of accuracy by means of adjustment or the like. Therefore, abrasion of the sliding portion made up of the cam surface 4a of the cam driver 4 and the cam surface 3b of the cam slider 3 needs to be low. In contrast, since the cam surface 4a of the cam driver 4 is formed into an inverted V-shape in cross section, the positional relationship between the cam slider 3 and the cam driver 4 is regulated so as not to be deviated in the direction orthogonal to the direction of movement of the cam slider.

Therefore, the sliding surface made up of the sliding contact surface 3a of the cam slider 3 and the sliding contact surface 2a of the cam holder 2 is affected by an error corresponding to a mounting error of the cam device and a process error of the mold, and hence so called an uneven contact occurs. In order to eliminate the uneven contact, it is necessary to prevent an excess of contact surface pressure by the enlargement of the contact surface due to the conformity during the initial abrasion period.

In order to satisfy the above-described requirement, if the combinations of the materials are the same between the sliding surface made up of the sliding contact surface 3a of the cam slider 3 and the sliding contact surface 2a of the cam holder 2, and the sliding portion made up of the cam surface 4a of the cam driver 4 and the cam surface 3b of the cam slider 3, the surface roughness of the sliding surface after finishing is increased or the arrangement of multiple recessed pockets to be filled with the solid lubricant is changed. Changing the combinations of the sliding materials is also effective in order to achieve this object.

The process ability of the cam device 1 may be selected from small, normal, slightly large, and large depending on the combination of the materials of the sliding portion (for example, low surface pressure, normal surface pressure, slightly high surface pressure, and high surface pressure) for each widths (for example, smallest, small, medium, slightly large, large, largest) of the cam device as shown in Table 1. As regards the selection of the width of the cam device, between the cam devices being in the adjacent grades in width, the widths of the adjacent cam devices are set in such a manner that the maximum process ability of a group of the cam devices having a certain width is larger than the minimum process ability of an adjacent group of the cam devices having a next larger width for compensating with respect to each other.

**[Table 1]**

| width of cam device | process ability | material combination of sliding portion |
|---|---|---|
| minimum | (a) small | low surface pressure |
| | (b) normal | normal surface pressure |
| | (c) slightly large | slightly high surface pressure |
| | (d) large | high surface pressure |
| small | (a) small | low surface pressure |
| | (b) normal | normal surface pressure |
| | (c) slightly large | slightly high surface pressure |
| | (d) large | high surface pressure |
| medium | (a) small | low surface pressure |
| | (b) normal | normal surface pressure |
| | (c) slightly large | slightly high surface pressure |
| | (d) large | high surface pressure |
| slightly large | (a) small | low surface pressure |
| | (b) normal | normal surface pressure |
| | (c) slightly large | slightly high surface pressure |
| | (d) large | high surface pressure |
| large | (a) small | low surface pressure |
| | (b) normal | normal surface pressure |
| | (c) slightly large | slightly high surface pressure |
| | (d) large | high surface pressure |
| largest | (a) small | low surface pressure |
| | (b) normal | normal surface pressure |
| | (c) slightly large | slightly high surface pressure |
| | (d) large | high surface pressure |

In this manner, the widths of the cam devices being in the adjacent grades in width are set in such a manner that, for example, the process ability of the cam device having a specification "large" among the cam devices A having a medium width is larger than the process ability of the cam device having a specification "small" among the cam devices B having a slightly larger width as shown in Fig. 2, so that the compatibility is secured between the cam devices being in the adjacent grades in width.

According to the cam device 1, the cam holder 2 reciprocates from a top dead center to a bottom dead center in the vertical direction together with the upper mold, thereby the cam slider 3 reciprocates along the fore-and-aft direction in the process direction. Accordingly, abrasion due to the sliding movement occurs to some extent at the sliding portion made up of the sliding contact surface 2a and the sliding contact surface 3a, and the sliding portion made up of the cam surface 3b and the cam surface 4a.

However, abrasion at the sliding portion made up of the sliding contact surface 2a and the sliding contact surface 3a makes progress early to solve the uneven contact between the both sliding portions between the sliding contact surface 2a and the sliding contact surface 3a due to the process of the mold and the assembly error in an initial stage, so that the process ability of the cam device can be exerted as specified.

In addition, since the abrasion loss at the sliding portion made up of the cam surface 3b and the cam surface 4a which defines the relative positional relationship in movement of the process tool with respect to a work (the object to be processed) can be set to be smaller than the abrasion loss of the sliding portion made up of the sliding contact surface 2a and the sliding contact surface 3a, adverse effects caused by the uneven contact in the initial stage of operation can be eliminated and, simultaneously, fluctuations in positional accuracy of the process tool can also be reduced.

When the abrasion of the sliding contact surface beyond the scope of the supposition made at first at the time of the mold design occurs after the operation of the mold, the sliding member 2b or the cam member 4b is replaced with parts having the same shape but being formed of a material different from that selected at first at the time of design so as to achieve the combination causing less abrasion, so that the abrasion beyond the supposition is accommodated. Also, the replacing work is easily achieved by attaching and detaching using the bolts, so that the process accuracy of the cam device 1 is maintained constant. Since the process abilities of the adjacent cam devices are set to overlap with each other for each width of the cam device, replacement of the entire cam device can also be done easily.

According therewith, reduction of time required for designing in the stage of the mold design and reduction of burden in design are achieved, and the number of steps of the mold maintenance can be reduced by avoiding the problem which occurs after the operation of the device due to the lowering of performance of the cam device caused by minute error in process or assembly of the mold, which is inevitable for the mold, while maintaining the process accuracy at a high degree of accuracy. In addition, the improvement of the performance can easily be achieved by the replacement of the part and hence the process accuracy can be maintained at a high degree of accuracy. Therefore, the cam device can be used for a variety of process tools.

## Claims

1. A method for grouping cam devices, each of the cam devices comprising
a cam holder (2) having a cam holder sliding contact surface (2a);
a cam slider (3) having
a cam slider sliding contact surface (3a) provided to come into sliding contact with the cam holder sliding contact surface (2a),
a cam slider cam surface (3b);
a cam driver (4) having
a cam driver cam surface (4a) provided to drive the cam slider (3) to a predetermined process direction; wherein an abrasion loss between the cam holder sliding contact surface (2a) and the cam sliding contact surface (3a) is greater than the abrasion loss between the cam driver surface (4a) and the cam slider cam surface (3b);
the method, comprising:
making a group of the cam devices, wherein the cam devices (1) are grouped depending on the basis of width dimensions, and the design structures of the respective groups are determined; **characterized in that**
the maximum process ability in a certain group among the groups
i) is larger than the minimum process ability of an adjacent group having a larger width dimension, and
ii) smaller than the maximum process ability in an adjacent group having a larger width dimension,
thereby reducing the necessity of changing the cam device for the change of the process ability.

2. The method according to Claim 1, wherein the cam holder sliding contact surface (2a) is provided to be detachably attached to the cam holder (2).

3. The method according to any one of Claims 1 to 2, wherein the cam driver cam surface (4a) of the cam driver (4) is provided to be detachably attached to the cam driver (4).

4. The method according to any one of Claims 1 to 3, whereby in case a load exerted to the cam device is changed, the load change is compensated
i) by changing the hardness or the material of the sliding contact surface (2a) of the cam holder (2); or
ii) by changing the hardness or the material of the cam driver surface (4a) of the cam driver (4),
without changing the hardness of the cam slider sliding contact surface (3a) and the cam slider cam surface (3b) of the cam slider (3).

## Patentansprüche

1. Verfahren zur Gruppierung von Nockenvorrichtungen, wobei jede der Nockenvorrichtungen aufweist:
einen Nockenhalter (2) mit einer Nockenhalter-Gleitkontaktfläche (2a);
einen Nockenschieber (3) mit
einer Nockenschieber-Gleitkontaktfläche (3a), die so vorgesehen ist, dass sie in Gleitkontakt mit der Nockenhalter-Gleitkontaktfläche (2a) kommt,
einer Nockenschieber-Nockenfläche (3b);
einen Nockenantrieb (4) mit
einer Nockenantriebs-Nockenfläche (4a), die so vorgesehen ist, dass sie den Nockenschieber (3) in eine vorbestimmte Bearbeitungsrichtung antreibt, wobei ein Abriebverlust zwischen der Nockenhalter-Gleitkontaktfläche (2a) und der Nockengleitkontaktfläche (3a) größer als der Abriebverlust zwischen der Nockenantriebsfläche (4a) und der Nockenschieber-Nockenfläche (3b) ist;
wobei das Verfahren aufweist:
Herstellen einer Gruppe der Nockenvorrichtungen, wobei die Nockenvorrichtungen (1) abhängig auf der Grundlage von Breitenabmessungen gruppiert werden und die Gestaltungsstrukturen der jeweiligen Gruppen bestimmt werden; **dadurch gekennzeichnet, dass**
das maximale Bearbeitungsvermögen in einer bestimmten Gruppe unter den Gruppen
i) größer als das minimale Bearbeitungsvermögen einer benachbarten Gruppe mit einer größeren Breitenabmessung ist und
ii) kleiner als das maximale Bearbeitungsvermögen in einer benachbarten Gruppe mit einer größeren Breitenabmessung ist,
wodurch die Notwendigkeit verringert wird, die Nockenvorrichtung für die Änderung des Bearbeitungsvermögens zu wechseln.

2. Verfahren nach Anspruch 1, wobei die Nockenhalter-Gleitkontaktfläche (2a) so vorgesehen wird, dass sie am Nockenhalter (2) abnehmbar angebracht ist.

3. Verfahren nach Anspruch 1 oder 2, wobei die Nockenantriebs-Nockenfläche (4a) des Nockenantriebs (4) so vorgesehen wird, dass sie am Nockenantrieb (4) abnehmbar angebracht ist.

4. Verfahren nach einem der Ansprüche 1 bis 3, wodurch bei Änderung einer Lastausübung auf die Nockenvorrichtung die Laständerung kompensiert wird
i) durch Ändern der Härte oder des Materials der Gleitkontaktfläche (2a) des Nockenhalters (2); oder
ii) durch Ändern der Härte oder des Materials der Nockenantriebsfläche (4a) des Nockenantriebs (4),
ohne die Härte der Nockenschieber-Gleitkontaktfläche (3a) und der Nockenschieber-Nockenfläche (3b) des Nockenschiebers (3) zu ändern.

## Revendications

1. Procédé pour grouper des dispositifs à came, chacun des dispositifs à came comprenant :
un support de came (2) ayant une surface de contact glissant (2a) de support de came ;
un curseur de came (3) ayant :
une surface de contact glissant (3a) de curseur de came prévu pour venir en contact de glissement avec la surface de contact glissant (2a) de support de came,
une surface de came (3b) de curseur de came ;
un entraîneur de came (4) ayant :
une surface de came (4a) d'entraîneur de came prévue pour entraîner le curseur de came (3) dans une direction de processus prédéterminée ; dans lequel une perte d'abrasion entre la surface de contact glissant (2a) de support de came et la surface de contact glissant (3a) de came est supérieure à la perte d'abrasion entre la surface (4a) d'entraîneur de came et la surface de came (3b) du curseur de came ;
le procédé comprenant l'étape suivante :
réaliser un groupe de dispositifs à came, dans lequel les dispositifs à came (1) sont regroupés en fonction des largeurs, et les structures de conception des groupes respectifs sont déterminées ; **caractérisé en ce que** :
la capacité de façonnage maximum dans un certain groupe parmi les groupes :
i) est supérieure à la capacité de façonnage minimum d'un groupe adjacent ayant une dimension de largeur supérieure, et
ii) inférieure à la capacité de façonnage maximum dans un groupe adjacent ayant une dimension de largeur supérieure,
réduisant ainsi la nécessité de changer le dispositif à came pour le changement de la capacité de façonnage.

2. Procédé selon la revendication 1, dans lequel la surface de contact glissant (2a) de support de came est prévue pour être fixée, de manière amovible, au support de came (2).

3. Procédé selon l'une quelconque des revendications 1 à 2, dans lequel la surface de came (4a) d'entraîneur de came de l'entraîneur de came (4) est prévue pour être fixée, de manière amovible, à l'entraîneur de came (4).

4. Procédé selon l'une quelconque des revendications 1 à 3, moyennant quoi, dans le cas dans lequel une charge exercée sur le dispositif à came est modifiée, le changement de charge est compensé :
i) en modifiant la dureté ou le matériau de la surface de contact glissant (2a) du support de came (2) ; ou bien
ii) en modifiant la dureté ou le matériau de la surface (4a) d'entraîneur de came de l'entraîneur de came (4),
sans modifier la dureté de la surface de contact glissant (3a) de curseur de came et de la surface de came (3b) de curseur de came du curseur de came (3).
